# EUROPEAN PATENT APPLICATION

(11) **EP 2 009 938 A1**
(43) Date of publication of application: **31.12.2008**
(21) Application number: 07720435.2
(22) Date of filing: 16.03.2007
(51) Int. Cl.: H04Q 7/28

(54) **A METHOD, SYSTEM AND DEVICE FOR REALIZING GROUP COMMUNICATION**

(30) Priority: 31.03.2006 CN 200610067079
(71) Applicant: Huawei Technologies Co., Ltd., Longgang District, Shenzhen, Guangdong 518129 (CN)
(72) Inventor: YANG, Changdong, Shenzhen, Guangdong 518129 (CN)
(74) Representative: Hengelhaupt, Jürgen
(86) International application number: PCT/CN2007/000857
(87) International publication number: WO 2007/112654

(57) **Abstract**

The present invention provides a method, system and device for realizing trunked communication. When a calling terminal and a called terminal are offline from a network, the calling terminal transmits synchronization information to the called terminal and the called terminal gets synchronized to the calling terminal according to the synchronization information. The calling terminal further transmits a system message to the called terminal and the called terminal obtains information on the trunked communication traffic channel according to the system message and monitors the trunked communication traffic channel. Then, the calling terminal transmits subscriber voice information to the called terminal via the trunked communication traffic channel, thereby realizing trunked communication. With the present invention, the calling terminal and the called terminal can also realize trunked communication when being offline to the network.

## Description

### FIELD OF THE INVENTION

The present invention relates to trunked communication technology and in particular to a method, system and device for realizing trunked communication.

### BACKGROUND

Digital trunked communication network is a new mobile communication system, which can realize communication between a terminal and all the other terminals, such as Global System for Mobile communications (GSM), Code Division Multiple Access (CDMA) network etc. There are many digital trunked systems based on the digital trunked communication network, such as Integrated Digital Enhanced Network (IDEN) employing Time Division Multiple Access (TDMA), Terrestrial Trunked Radio (TETRA), 800M Group Trunk communication (GT800), and Global Open Trunking Architecture (GOTA) employing CDMA, etc.

In the prior art, trunked communication can not be realized without support of a corresponding network, regardless of the type of trunked communication system. The essential solution of realizing trunked communication in the prior art is: a base station periodically transmits outgoing synchronization information via a synchronization channel; a trunked system terminal receives the synchronization information and synchronizes its receiving frequency with the transmitting frequency of the base station according to the synchronization information; the trunked system terminal further acquires description information on the trunked communication traffic channel from a broadcast channel; the calling trunked terminal further transmits voice information via the trunked communication traffic channel, and a called trunked terminal monitors the trunked communication traffic channel to realize the trunked communication.

In the prior art, trunked communication can not be realized without support of a network, that is to say, if the trunked system terminal is beyond the signal transmission range of the base station(i.e., offline from the network), the trunked system terminal can not receive the synchronization information, therefore trunked communication can not be realized. However, in practical applications, the subscriber wishes to realize trunked communication even when the trunked system terminal is offline from the network. For example, members of special departments such as the policemen and firemen might like to keep contact using trunked communication when working in special areas. Thus, the prior art can not meet the requirement of realizing trunked communication without support of a network.

### SUMMARY

The invention provides a method, system and device for realizing trunked communication when the terminals are offline from the network.

According to the present invention, a method is provided for realizing trunked communication, the method comprises the following steps:
transmitting, by a calling terminal, synchronization information;
performing, by a called terminal, a synchronization process with the calling terminal according to the synchronizing information received by the called terminal;
transmitting, by the calling terminal, a system message carrying information on a trunked communication traffic channel;
monitoring, by the called terminal, the trunked communication traffic according to the system message received by the called terminal;
transmitting, by the calling terminal, an outgoing subscriber voice message via the trunked communication traffic channel; and
receiving, by the called terminal, the subscriber voice message from the trunked communication traffic channel.

According to the present invention, a system is provided for realizing trunked communication comprising :
a calling terminal configured to transmit outgoing synchronization information, a system message carrying information on a trunked communication traffic channel and subscriber voice information; and
a called terminal configured to receive the synchronization information from the calling terminal and complete a synchronization process with the calling terminal according to the synchronization information; receive the system message from the calling terminal and monitor the trunked communication traffic channel according to the system message; and receive the subscriber voice information from the calling terminal.

Embodiments of the present invention also provide two terminals for realizing trunked communication.

According to the first aspect of the embodiments, there's provided a terminal for realizing trunked communication, the terminal at least comprises:
a calling module, configured to transmit outgoing synchronization information, a system message carrying information on a trunked communication traffic channel and subscriber voice information.

According to the second aspect of the embodiments, a terminal is provided for realizing trunked communication, and the terminal at least comprises :
a synchronization module, configured to transmit synchronization information and a system message carrying information on a trunked communication traffic channel; and
a calling module, configured to transmit subscriber voice information.

In summary, embodiments of the present invention provide a method, system and device for realizing trunked communication. When being offline from the network, the calling terminal can transmit outgoing synchronization information and the system message on its own initiative. The called terminals within the signal transmission range of the calling terminal can complete the synchronization process with the calling terminal according to the synchronization information and get the trunked communication traffic channel information according to the system message. The calling terminal then transmits subscriber voice information via the trunked communication traffic channel and the called terminal monitors the trunked communication traffic channel to receive the subscriber voice information, thereby realizing trunked communication.

### BRIEF DESCRIPTION OF THE DRAWINGS

Figure 1 is a flow chart according to a first method embodiment;

Figure 2 is a schematic diagram showing the message flow between a calling terminal and a called terminal according to a second method embodiment;

Fig. 3 is a schematic diagram of the internal structure of a calling module according to the second method embodiment;

Fig. 4 is a schematic diagram showing the message flow between a calling terminal and a called terminal according to a third method embodiment;

Fig. 5 is a diagram illustrating an architecture of a system according to a system embodiment;

Fig. 6 is a diagram of the internal structure of a calling terminal according to a first embodiment; and

Fig. 7 is a diagram of the internal structure of a calling terminal according to a second embodiment.

### DETAILED DESCRIPTION

The present invention is hereinafter further described in detail with reference to the accompanying drawings and preferred embodiments to further clarify the purpose, technical solutions and advantages of the present invention..

When a trunked communication system is offline from a network, for realizing trunked communication, a calling terminal may transmit synchronization information and system message, and a called terminal can complete a synchronization process according to the synchronization information, acquire information on a trunked communication traffic channel according to the system message, then the calling terminal and called terminal further realize trunked communication via the trunked communication traffic channel.

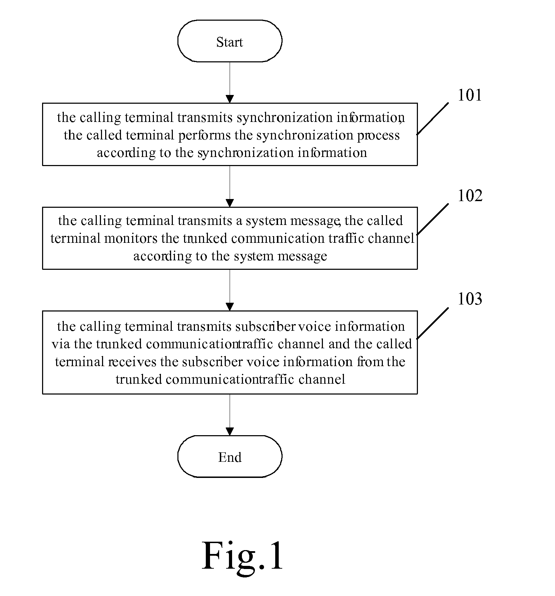

Fig. 1 is a flow chart according to a first method embodiment of the present invention. As shown in Fig. 1, the embodiment realizes trunked communication with the following steps:

Step 101: The calling terminal transmits outgoing synchronization information, the called terminal receives the synchronization information and completes a synchronization process with the calling terminal according to the synchronization information;

Step 102: The calling terminal transmits an outgoing system message carrying information on a trunked communication traffic channel, and the called terminal monitors the trunked communication traffic channel according to the received system message;

Step 103: The calling terminal transmits outgoing subscriber voice information via the trunked communication traffic channel and the called terminal receives the subscriber voice information from the trunked communication traffic channel.

Wherein, the calling terminal is a terminal initiating the trunked communication traffic, or a terminal initiating the call on its own initiative, and the called terminal is a terminal located within the signal transmission range of the calling terminal. Being offline from the network, the calling terminal needs to transmit the synchronization information and the system message when the calling terminal wishes to perform trunked communication traffic. The called terminal within the signal transmission range of the calling terminal may complete the synchronization process according to the synchronization information and monitor the trunked communication traffic channel according to the system message. Thereafter, the calling terminal may transmit the subscriber's voice information to the called terminal via the trunked communication traffic channel, thus realizing trunked communication.

The synchronization information refers to information necessary for the called terminal to synchronize with the calling terminal, and the synchronization process is a process for the called terminal to complete synchronization according to the synchronization information.

The synchronization information and synchronization process are different for different systems. For example, in the 800M group trunk communication (GT800) system, the synchronization information includes frequency correction information carried by the frequency correction channel (FCCH), a frame number carried by the synchronization channel (SCH); here the frame structure is of 51 multiframes defined by the GSM protocol. The GT800 system transmits the frequency correction information and frame number using TDMA according to the GSM protocol, thus the frequency correction information and frame number are transmited over the FCCH and SCH at different time respectively. Reference can be made to the GSM protocol for the transmission of the frequency correction information and frame number, which will not be described in detail here. Accordingly, upon receiving the synchronization information, the synchronization process completed by the called terminal comprises the following two steps: (1) the called terminal adjusts its receiving frequency to the same frequency as the transmitting frequency of the calling terminal according to the synchronization information, thereby realizing frequency synchronization; (2) the called terminal adjusts its inverse baseband processing time to the same timing as the baseband processing timing of the calling terminal according to the frame number, thereby realizing frame synchronization. When the called terminal completes the frequency synchronization and frame synchronization, synchronization with the calling terminal is realized.

The synchronization information in the other systems might be different from that of the GT800 system. For example, in the CDMA system, the synchronization information includes information such as frequency correction information and same type code pattern etc. Accordingly, the called terminal completes different synchronization process to get synchronized with the calling terminal.

Moreover, the calling terminal can be a terminal including a calling module (i.e., a single module terminal) or a terminal including a calling module and a synchronization module (i.e., a dual-module terminal). When the calling terminal is a single module terminal, the outgoing synchronization information, system information and subscriber voice information transmitted by the calling terminal are all transmitted via the calling module. When the calling terminal is a dual module terminal, the outgoing synchronization information and system information transmitted by the calling terminal are transmitted via the synchronization module and the subscriber voice information is transmitted via the calling module.

To clarify the technical solution of the present invention, the present invention will be described in detail with reference to the second and third method embodiments in the following.

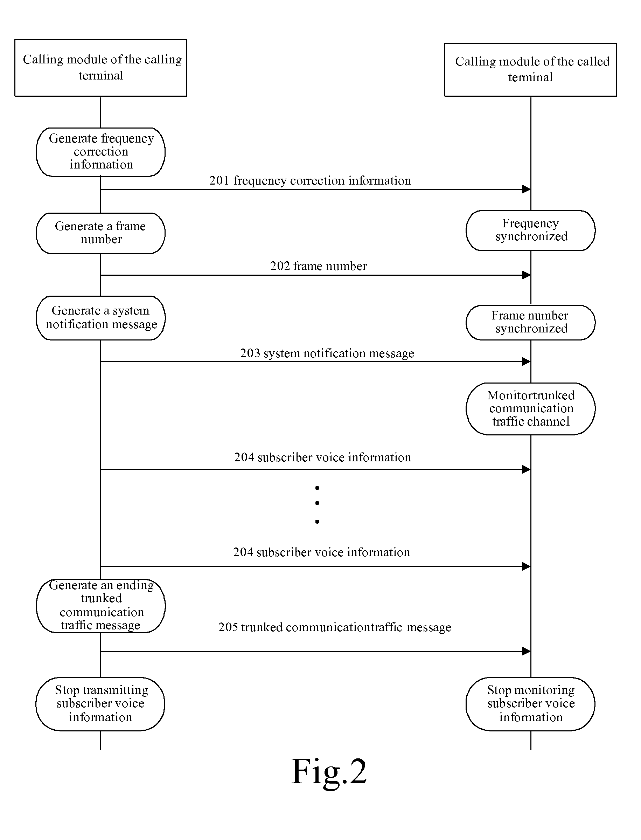

In the second method embodiment, the calling terminal and called terminal are of the type of GT800 trunked communication system, and both the calling terminal and called terminal are single module terminals. The synchronization information on the embodiment includes frequency correction information and a frame number. According to the GSM protocol, the frequency correction information is carried over FCCH and the frame number over SCH. Moreover, the system notification is carried over BCCH according to the GSM protocol. Fig. 2 illustrates a message flow between the calling terminal and called terminal of the embodiment. As shown in Fig. 2, the method for realizing trunked communication according to the embodiment comprises the following steps.

Step 201: According to the GSM protocol, the frequency correction information is generated by the calling module of the calling terminal, subjected to a baseband and Radio Frequency (RF) processing, and then sent out over FCCH. The calling module of the called terminal performs an inverse RF processing and an inverse baseband processing on the signal received over FCCH to obtain the frequency correction information, then the called terminal adjusts its operating frequency to the same operating frequency as the calling terminal according to the frequency correction information.

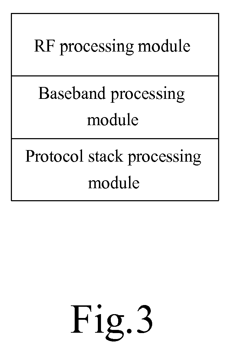

Fig. 3 illustrates the schematic internal structure of the calling module. As shown in Fig. 3, the calling module generally includes a protocol stack processing module, a baseband processing module and an RF processing module. The protocol stack processing module may generate or form signaling, such as the frequency correction information and frame number etc., then the baseband processing module performs the baseband processing such as channel encoding, interleaving, encrypting, and the RF processing module performs an RF processing such as modulating, mixing and amplifying. The frequency correction information and frame number are then carried over FCCH and transmitted.

In a practical application, when the calling terminal initiates a call, it generally first adjusts its frequency to a specified operating band and then executes step 201. Here the operating band is a frequency band allowing the calling terminal to transmit outgoing signals. For example, in the present embodiment, the calling terminal can adjust its frequency to an operating band agreed by both the calling terminal and the called terminal.

Furthermore, in this embodiment, since both the calling terminal and the called terminal belong to a GT800 system, the signaling generated by the calling terminal can be acquired directly according to the protocol requirement of GT800 system. In practical applications, it may also generate the signaling without following the GT800 system protocol, as long as both the calling terminal and the called terminal follow the same protocol.

In the embodiment, the called terminal is also a single module terminal. When the called terminal receives the signal from FFCH, it performs an inverse processing to that of step 201. That is, the calling module of the called terminal performs inverse RF processing such as frequency-conversion, amplification and demodulation on the signal received from FCCH via the RF processing module, and performs an inverse baseband processing such as decryption, de-interleaving and channel decoding via the baseband processing module, and extracts and acquires the frequency correction information using the protocol stack processing module. The called terminal then adjusts its operating frequency to the operating frequency of the calling module according to the frequency correction information, thereby realizing frequency synchronization with the calling terminal.

Step 202: The calling module of the calling terminal generates the frame number and performs the baseband processing and RF processing on the frame number, the processed frame number is then carried by SCH and transmitted; the calling module of the called terminal performs the inverse RF processing and inverse baseband processing on the signal received from SCH and obtains the frame number, then the called terminal adjusts its baseband processing timing to the same baseband processing timing as the calling terminal according to the frame number.

The process of this step is similar to that of step 201, with the exception of information and the channel carrying the information, which will not be elaborated here.

Step 203: The calling module of the calling terminal generates a system notification message carrying information on the trunked communication traffic channel according to the protocol with the called terminal and performs the baseband processing and RF processing on the notification message, then the notification message is transmitted over a BCCH; the called terminal performs the inverse RF processing, inverse baseband processing and inverse protocol processing on the received signal and obtains the system notification message. Then the called terminal monitors the trunked communication traffic channel according to the information on the trunked communication traffic channel contained in the system notification message.

In this embodiment, the calling terminal allows the information on the trunked communication traffic channel to be carried over the system notification message for transmission. In practical applications, the information on the trunked communication traffic channel may be also carried in a group calling message and transmitted via a sub-channel notification channel (NCH) of BCCH. Here, both the system notification message and the group calling message can be referred to as a system message. The process of this step is similar to that of step 201, with the exception of information and the channel carrying the information, which will not be elaborated here.

Step 204: The calling module of the calling terminal receives the subscriber voice information and performs a baseband processing and an RF processing on the subscriber voice information and transmits over the trunked communication traffic channel; the calling module of the called terminal performs an inverse RF processing, an inverse baseband processing on the signal monitored on the trunked communication traffic channel to obtain the subscriber voice information.

In a practical application, after performing step 203, the calling terminal generally plays a prompt sound to the subscriber indicating that he/she can speak. The subscriber voice information is received by a man-machine interaction module of the calling module. The process of this step is similar to that of step 201, with the exception of the transmission of subscriber voice information carried over the trunked communication traffic channel, which will not be elaborated here.

The above step is a key step for realizing trunked communication between the calling and called terminals, which generally lasts a relatively long time. When the calling terminal wants to end trunked communication, it performs the following step 205.

Step 205: The calling module of the calling terminal generates an ending trunked communication traffic message according to the protocol with the called terminal, and performs the baseband processing and RF processing on the ending trunked communication traffic message and transmits over the trunked communication channel, and stops the transmission of the outgoing subscriber voice information. The called terminal performs the inverse RF processing, the inverse baseband processing and the inverse protocol processing on the signal received over the trunked communication channel to obtain the ending trunked communication traffic message. Then the called terminal stops monitoring the trunked communication channel and ends the current trunked communication.

The process of the above step is similar to that of step 201, with the exception of the transmission of the ending trunked communication traffic message over the trunked communication traffic channel, which will not be elaborated here.

With the technical solution of the present embodiment, when the calling terminal and called terminal are offline from the network, the calling terminal may initiate a call and transmit the synchronization and system information on its own initiative. The called terminal will get synchronized with the calling terminal and then the trunked communication can be realized.

In the following third method embodiment, the calling terminal and called terminal are of the type of GT800 trunked communication system. The calling terminal is a dual module terminal, and the called terminal can be a single module or a dual module terminal. When the called terminal is a single module terminal, the calling module of the called terminal is configured to receive and process synchronization information, system message and subscriber voice information; when the called terminal is a dual module terminal, the calling module of the called terminal can still be configured to process synchronization information, system message and subscriber voice information; alternatively the synchronization information and system message can be processed by the synchronization module of the called terminal and the subscriber voice information is processed by the calling module of the called terminal.

In the embodiment, the synchronization module is similar to the calling module, including a protocol stack processing module, a baseband processing module and an RF processing module. The internal structure of the synchronization module is the similar to that of the calling module shown in the second embodiment, which will not be discussed here.

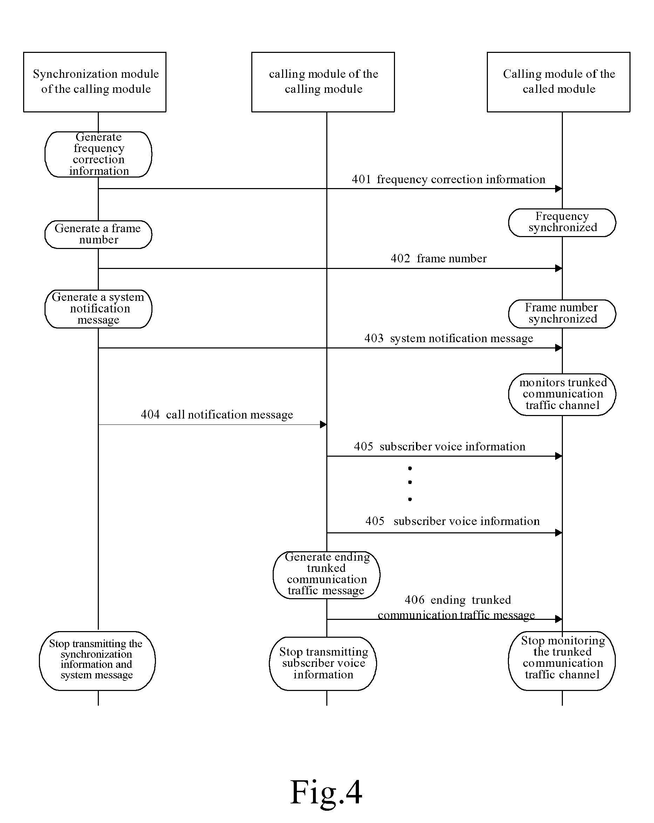

Fig. 4 illustrates the message flow between the calling terminal and called terminal according to the present embodiment. As shown in Fig. 4, the method for realizing trunked communication according to the embodiment comprises the following steps:

Steps 401∼403 are similar to steps 201∼203 in the second method embodiment, with the exception that the frequency correction information, frame number and system message are generated and transmitted by the synchronization module of the calling terminal.

In practical applications, the synchronization module of the calling terminal can periodically transmit outgoing synchronization information and system message during the trunked communication. Thus, when other called terminals get into the signal transmission range of the calling terminal when the calling terminal is transmitting subscriber voice information to the current called terminal, the other called terminals may receive the synchronization information and system message and thus participate in the already initiated trunked communication. For example, a called terminal 2 enters the signal transmission range of the calling terminal when the calling terminal is in trunked communication with the called terminal 1. Since the synchronization module of the calling terminal continuously and periodically transmit the outgoing synchronization information and system message, the called terminal 2 entering the signal transmission range of the calling terminal can also receive the synchronization information and system message, and complete the synchronization processing with the calling terminal according to the synchronization information and monitor the trunked communication traffic channel carrying the subscriber voice information according to the system message. Thus the called terminal 2 can receive the subscriber voice information transmitted by the calling terminal as the called terminal 1 does and participate in the trunked communication.

Furthermore, in the embodiment, after the synchronization module of the calling terminal transmits the synchronization information, the calling module of the calling terminal also needs to get synchronized with the synchronization module according to the synchronization information. There are two ways to realize such a synchronization. The first is called a signal coupling scheme, that is, the synchronization process is the similar to that of synchronizing with the called terminal, which is realized by the calling module receiving the synchronization information transmitted by the synchronization module of the calling terminal. The second way is called internal synchronization scheme, that is, the synchronization module of the calling terminal transmits the outgoing synchronization information to the calling module of the calling terminal inside the calling terminal, thereby realizing synchronization.

Step 404: The synchronization module of the calling terminal transmits a calling notification message to the calling module of the calling terminal.

Step 405 is the similar to step 204 of the second method embodiment, which will not be elaborated here.

In the embodiment, the synchronization module of the calling terminal periodically transmits the outgoing frequency correction information, frame number and system message during the execution of steps 404 and 405.

Step 406 is the similar to step 205 of the second method embodiment, with the exception that the synchronization module of the calling terminal also stops periodical transmission of the outgoing synchronization information and system message.

In practical applications, when the calling terminal wants to end the current trunked communication traffic, a control signal may be transmit to the synchronization module and calling module respectively through the man-machine interface of the calling terminal. The synchronization module of the calling terminal stops transmitting the outgoing synchronization information and system message upon receiving the control signal, while the calling module of the calling terminal transmits an outgoing ending trunked communication traffic message. The called terminal stops monitoring the trunked communication traffic channel when receiving the ending trunked communication traffic message and the current trunked communication traffic is ended.

With the technical solution of the present embodiment, it is possible to realize trunked communication when the calling terminal and called terminal are offline from the network; it also allows a called terminal entering the signal transmission range of the calling terminal to participate in the already initiated trunked communication.

In practical applications, the calling terminal and called terminal can also communicate with each other using protocols defined by other trunked systems, for example protocols supported by trunked systems such as Integrated Digital Enhanced Network (IDEN), Terrestrial Trunked Radio (TETRA) and Global Open Trunking Architecture (GOTA). It is apparent that when other protocols are used for communication, the synchronization information transmitted by the calling terminal might be different and the synchronization process will be different accordingly. Detailed realizations can vary according to the specific application. The calling terminal and called terminal can also communicate with each other using other protocols, as long as both parties can identify the signaling and messages according to the other protocols.

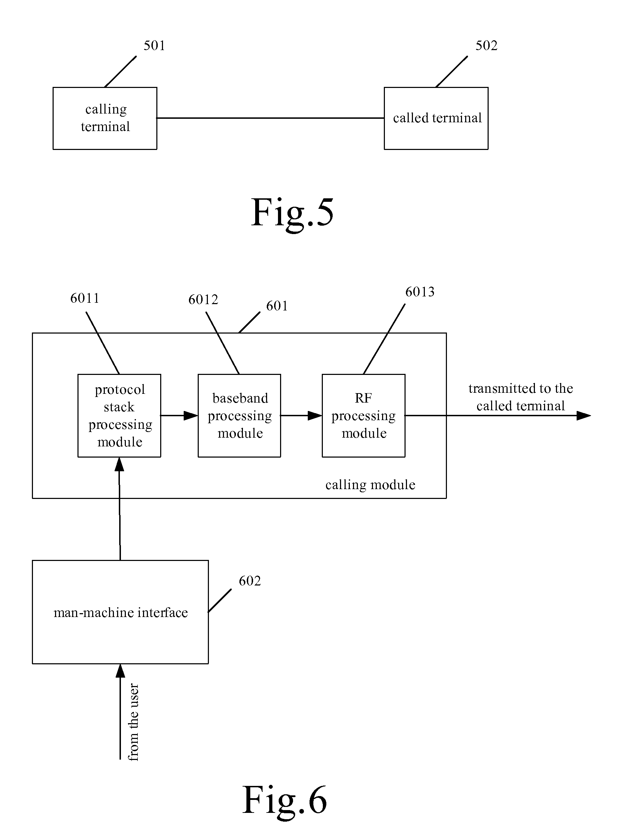

With the above methods, the present invention also provides a system and device for realizing trunked communication. Fig. 5 illustrates a basic architecture of the system. As shown in Fig. 5, the system comprises :

a calling terminal 501, configured to transmit the outgoing synchronization information, the system message carrying information on the trunked communication traffic channel and subscriber voice information;

a called terminal 502, configured to receive the synchronization information from the calling terminal 501 and completing the synchronization process with the calling terminal 501 according to the synchronization information. It also receives the system message from the calling terminal 501 and monitors the trunked communication traffic channel according to the system message, and receives the subscriber voice information from the calling terminal 501.

Wherein, the calling terminal 501 may be a single module terminal or a dual module terminal. If it is a single module terminal, then it comprises a calling module for transmitting the outgoing synchronization information, the system message carrying information on the trunked communication traffic channel and subscriber voice information. If it is a dual module terminal, then it comprises a synchronization module and a calling module, wherein the synchronization module is configured to transmit the outgoing synchronization information and the system message carrying information on the trunked communication traffic channel, and the calling module is configured to transmit the outgoing subscriber voice information.

The internal structure of the terminals will be explained with reference to the two embodiments of the device.

In the first device embodiment, the terminal is a single module terminal. Fig. 6 illustrates the basic structure of the terminal. As shown in Fig. 6, the terminal comprises a calling module 601 and a man-machine interface 602.

The calling module 601 comprises :

a protocol stack processing module 6011, configured to generate the synchronization information to be transmitted to a baseband processing module 6012; generate the system message carrying information on the trunked communication traffic channel to be transmitted to the baseband processing module 6012; perform a protocol processing on the subscriber voice information to be transmitted to the baseband processing module 6012;

a baseband processing module 6012, configured to perform a baseband processing on the signaling from the protocol stack processing module 6011 and transmitting the processed signaling to an RF processing module 6013; and

an RF processing module 6013, configured to perform an RF processing on the signal from the baseband processing module 6012 for transmission.

In addition, there's provided a man-machine interface 602 configured to trigger the protocol stack processing module 6011 to generate the synchronization information and the system message carrying information on the trunked communication traffic channel, and to transmit the received subscriber voice information to the protocol stack processing module 6011.

In this embodiment, when the man-machine interface 602 receives an instruction from the user, for example when the user triggers a button associated with the man-machine interface 602, the protocol stack processing module 6011 in the calling module 601 will be triggered to generate the synchronization information. The synchronization information is transmitted after being subjected to a baseband process by the baseband processing module 6012 and to an RF process by the RF processing module 6013. Similarly, the protocol stack processing module 6011 also generates the system message carrying information on the trunked communication traffic channel, and the system message is transmitted after being subjected to the baseband process by the baseband processing module 6012 and to the RF process by the RF processing module 6013. At this time, the man-machine interface 602 may receive the subscriber voice information from the user and transmit to the protocol stack processing module 6011 for processing. The processed subscriber voice information is further subjected to the baseband process by the baseband processing module 6012 and to the RF process by the RF processing module 6013 before transmission, thus realizing trunked communication with the called terminal.

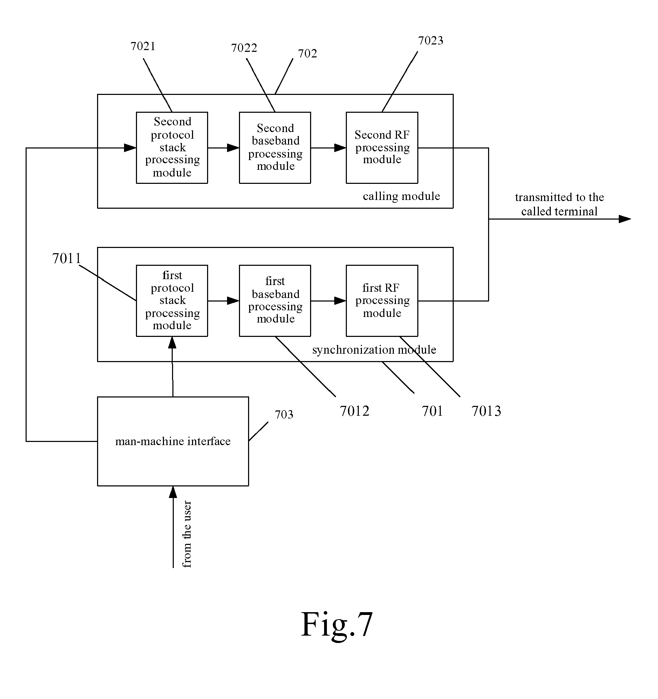

In the second device embodiment, the terminal is a dual module terminal. Fig. 7 illustrates the basic structure of the terminal. As shown in Fig. 7, the terminal comprises a synchronization module 701 and a calling module 702 and a man-machine interface 703.

The synchronization module 701 is configured to transmit the outgoing synchronization information and the system message carrying information on the trunked communication traffic channel; the calling module 702 is configured to transmit the outgoing subscriber voice information; the man-machine interface 703 is configured to trigger the synchronization module 701 to generate the synchronization information and the system message carrying information on the trunked communication traffic channel and to transmit the received subscriber voice information to the calling module 702. Here the functions of the synchronization module 701 and calling module 702 are substantially the same, with the exception that the synchronization module 701 is only configured to process information related to synchronization while the calling module 702 only processes voice information. However, to make the description clear, the synchronization module 701 and calling module 702 will be described separately in the following, and different reference numbers are used to indicate their internal module respectively.

The synchronization module 701 comprises the following modules:

a first protocol stack processing module 7011, configured to generate the synchronization information to be transmitted to a first baseband processing module 7012; generate the system message carrying information on the trunked communication traffic channel to be transmitted to the first baseband processing module 7012;

the first baseband processing module 7012, configured to perform baseband processing on the signaling from the first protocol stack processing module 7011 to be transmitted to a first RF processing module 7013; and

the first RF processing module 7013, configured to perform RF processing on the signal from the first baseband processing module 7012 for further transmission.

Furthermore, the calling module 702 comprises:

a second protocol stack processing module 7021, configured to perform protocol processing on the subscriber voice information and transmitting the processed subscriber voice information to a second baseband processing module 7022;

the second baseband processing module 7022, configured to perform baseband processing on the information from the second protocol stack processing module 7021 and transmitting the processed information to a second RF processing module 7023; and

the second RF processing module 7023, configured to perform RF processing on the signal from the second baseband processing module 7022 for further transmission.

In this embodiment, when the man-machine interface 703 receives an instruction from the user, for example when the user triggers a button associated with the man-machine interface 703, the first protocol stack processing module 7011 in the synchronization module 701 will be triggered to generate the synchronization information. The synchronization information is then subjected to the baseband process by the first baseband processing module 7012 and RF process by the first RF processing module 7013 for further transmission. Similarly, the first protocol stack processing module 7011 also generates the system message carrying information on the trunked communication traffic channel, which is then subjected to the baseband process by the first baseband processing module 7012 and RF process by the first RF processing module 7013 for further transmission. At this time, the man-machine interface 703 may receive the subscriber voice information from the user which is then transmitted to the second protocol stack processing module 7021 in the calling module 702 for the protocol processing. After the protocol processing, the subscriber voice information is then subjected to the baseband process by the second baseband processing module 7022 and the RF process by the second RF processing module 7023 for further transmission, thus realizing trunked communication with the called terminal.

The embodiment of the present invention only describe the internal structure of the calling module, and the internal structure of the called module is substantially the same, with the exception that corresponding inverse processings will be performed when the called terminal receives the information from the calling module, which will not be elaborated here.

With the solutions provided by the embodiments of the present invention, when terminals in the trunked communication system get offline from the network, if it requires communication, the calling terminal may transmit the outgoing synchronization information, system message, and when the called terminal gets synchronized with the calling terminal, it will become possible to realize trunked communication.

In summary, the preferred embodiments of the present invention are described above, which does not intend to limit the scope of the present invention. Any modification, equivalent substitution and improvement of the present invention are in the scope of the present invention.

## Claims

1. A method for realizing trunked communication, wherein the method comprises the following steps of:
transmitting, by a calling terminal, synchronization information, performing by a called terminal a synchronization process with the calling terminal according to the synchronizing information received by the called terminal;
transmitting, by the calling terminal, a system message carrying information on a trunked communication traffic channel, monitoring the trunked communication traffic channel by the called terminal according to the system message received by the called terminal;
transmitting, by the calling terminal, subscriber voice information via the trunked communication traffic channel, and receiving by the called terminal the subscriber voice information via the trunked communication traffic channel.

2. The method of claim 1, wherein the step of transmitting by the calling terminal the synchronization information comprises:
generating, by the calling terminal, the synchronization information according to a protocol agreed by the calling terminal and the called terminal and performing a baseband processing and a Radio Frequency (RF) processing on the synchronization information for transmission.

3. The method of claim 2, wherein the step of performing by the called terminal a synchronization process with the calling terminal according to the synchronizing information received by the called terminal comprises:
performing, by the called terminal, an inverse RF processing, an inverse baseband processing and an inverse protocol processing on the received signal to obtain the synchronization information, and performing the synchronization process between the calling terminal and the called terminal according to the synchronization information.

4. The method of claim 1, wherein the step of transmitting by the calling terminal the system message comprises:
generating, by the calling terminal, the system message carrying information on the trunked communication traffic channel according to a protocol agreed by the calling terminal and the called terminal and performing the baseband processing and the RF processing on the system message for transmission.

5. The method of claim 4, wherein the step of monitoring the trunked communication traffic channel by the called terminal according to the system message received by the called terminal comprises the step of:
performing, by the called terminal, an inverse RF processing, an inverse baseband processing and an inverse protocol processing on the received signal to obtain the system message, and monitoring the trunked communication traffic channel according to the information on the trunked communication traffic channel contained in the system message.

6. The method of claim 1, wherein the step of transmitting by the calling terminal subscriber voice information comprises the step of:
receiving, by the calling terminal, the subscriber voice information, and performing a baseband processing and an RF processing on the subscriber voice information prior to transmission over the trunked communication traffic channel.

7. The method of claim 6, wherein the step of receiving by the called terminal the subscriber voice information comprises the step of:
performing, by the called terminal, an inverse RF processing and an inverse baseband processing on the signal monitored on the trunked communication traffic channel to obtain the subscriber voice information.

8. The method of claim 1, wherein the synchronization information is frequency correction information and frame number when the protocol between the calling terminal and called terminal is a protocol supporting 800M group trunk communication system; and
the step of performing by the called terminal the synchronization process with the calling terminal according to the synchronizing information comprises:
performing, by the called terminal, frequency synchronization according to the frequency correction information and frame synchronization according to the frame number.

9. The method of any of claims 1 to 8, wherein when the calling terminal ends the trunked communication, the method further comprises the following steps:
generating, by the calling terminal, an ending trunked communication traffic message according to the protocol with the called terminal, performing the baseband processing and the RF processing on the ending trunked communication traffic message for transmission to end the trunked communication;
performing, by the called terminal, the inverse RF processing, the inverse baseband processing and the inverse protocol processing on the received message to obtain the ending trunked communication traffic message, thereby ending the trunked communication.

10. A system for realizing trunked communication, comprising:
a calling terminal, configured to transmit outgoing synchronization information, a system message carrying information on a trunked communication traffic channel and subscriber voice information;
a called terminal, configured to receive the synchronization information from the calling terminal and perform a synchronization process with the calling terminal according to the synchronization information; receive the system message from the calling terminal and monitor the trunked communication traffic channel according to the system message; and receive the subscriber voice information from the calling terminal.

11. A terminal for realizing trunked communication, wherein the terminal at least comprises:
a calling module, configured to transmit outgoing synchronization information, a system message carrying information on a trunked communication traffic channel and subscriber voice information.

12. The terminal of claim 11, wherein the calling module comprises:
a protocol stack processing module, configured to generate the synchronization information and the system message carrying information on the trunked communication traffic channel for transmission to a baseband processing module, perform a protocol processing on the subscriber voice information for transmission to the baseband processing module;
the baseband processing module, configured to perform the baseband processing on the signaling from the protocol stack processing module for transmission to an RF processing module; and
the RF processing module, configured to perform an RF processing on the signal from the baseband processing module for transmission.

13. The terminal of claim 12, wherein the terminal further comprises:
a man-machine interface, configured to trigger the protocol stack processing module to generate the synchronization information and the system message carrying information on the trunked communication traffic channel, and transmit the received subscriber voice information to the protocol stack processing module.

14. A terminal for realizing trunked communication, wherein the terminal at least comprises:
a synchronization module, configured to transmit synchronization information and a system message carrying information on a trunked communication traffic channel; and
a calling module, configured to transmit subscriber voice information.

15. The terminal of claim 14, wherein the synchronization module comprises:
a first protocol stack processing module, configured to generate the synchronization information and the system message carrying the information the trunked communication traffic channel for transmission to a first baseband processing module;
the first baseband processing module, configured to perform a baseband processing on the signaling from the first protocol stack processing module for transmission to a first RF processing module; and
the first RF processing module, configured to perform an RF processing on the signal from the first baseband processing module for further transmission.

16. The terminal of claim 14, wherein the calling module comprises:
a second protocol stack processing module, configured to perform a protocol processing on the subscriber voice information and transmit the processed subscriber voice information to a second baseband processing module;
the second baseband processing module, configured to perform a baseband processing on information from the second protocol stack processing module for transmission to a second RF processing module; and
the second RF processing module, configured to perform an RF processing on the signal from the second baseband processing module for further transmission.

17. The terminal of claim 14, wherein the terminal further comprises:
a man-machine interface, configured to trigger the synchronization module to generate the synchronization information and the system message carrying information on the trunked communication traffic channel, and to transmit the received subscriber voice information to the calling module.
